# EUROPÄISCHE PATENTANMELDUNG

(11) **EP 4 471 945 A1**
(43) Veröffentlichungstag der Anmeldung: **04.12.2024**
(21) Anmeldenummer: 24176496.8
(22) Anmeldetag: 17.05.2024
(51) Int. Cl.: H01M 50/124

(54) **VERFAHREN ZUM ISOLIEREN EINER BATTERIEZELLE**

(30) Priorität: 31.05.2023 DE 102023205063
(71) Anmelder: VOLKSWAGEN AG, 38440 Wolfsburg (DE)
(72) Erfinder: Kwoczek, Lukas, 38102 Braunschweig (DE)

(57) **Zusammenfassung**

Die Erfindung betrifft ein Verfahren zum Isolieren einer Batteriezelle (10), wobei die Batteriezelle (10) ein Batteriegehäuse mit einem elektrischen Kontaktelement (12) zum elektrischen Kontaktieren eines Pols der Batteriezelle (10) aufweist, wobei ein Teil des Batteriegehäuses der Batteriezelle (10) mit einer Isolationsschicht (14) versehen wird und wobei auf einen zwischen dem elektrischen Kontaktelement (12) und der Isolationsschicht (14) angeordneten Bereich (16) des Batteriegehäuses ein Abschnitt (18) eines Isolationsmaterials aufgeklebt und dieser Bereich (16) des Batteriegehäuses dadurch elektrisch isoliert wird. Das Verfahren sieht vor, dass das Isolationsmaterial als aufgerollter Streifen (20) bereitgestellt und der Abschnitt (18) von dem aufgerollten Streifen (20) abgerollt und abgetrennt wird, bevor der Abschnitt (18) auf das Batteriegehäuse aufgeklebt wird.

## Beschreibung

Die Erfindung betrifft ein Verfahren zum Isolieren einer Batteriezelle nach dem Oberbegriff des Anspruchs 1.

Batteriezellen der in Rede stehenden Art weisen ein Batteriegehäuse mit wenigstens einem elektrischen Kontaktelement zum elektrischen Kontaktieren eines Pols der Batteriezelle auf.

Um das Batteriegehäuse elektrisch zu isolieren wird regelmäßig ein Teil des Batteriegehäuses der Batteriezelle mit einer Isolationsschicht versehen. Dies kann an einem großen Teil der Oberfläche des Batteriegehäuses erfolgen, ohne dass dabei besondere technische Herausforderungen auftreten. In der Praxis ist es jedoch so, dass die Batteriegehäuse an einigen Stellen Besonderheiten aufweisen, die das Aufbringen einer Isolationsschicht erschweren bzw. verhindern.

Im Stand der Technik sind daher Verfahren entwickelt worden, die zusätzliche Isolationsmaßnahmen zu der Isolationsschicht vorsehen, um eine hinreichende elektrische Isolierung des Batteriegehäuses zu ermöglichen.

So offenbaren beispielsweise die DE 10 2011 077 292 A1 und die DE 10 2017 216 673 A1 Verfahren, bei denen Schweißnähte derartiger Batteriegehäuse gesondert isoliert werden, indem sie mit Streifen aus einem Isolationsmaterial abgedeckt werden.

Eine weitere Stelle derartiger Batteriegehäuse, deren elektrische Isolation besondere Schwierigkeiten mit sich bringt, ist die elektrische Isolation von zwischen dem elektrischen Kontaktelement des Batteriegehäuses und der Isolationsschicht angeordneten Bereichen des Batteriegehäuses. In der Praxis lässt es sich oftmals nicht oder zumindest nicht mit vertretbarem Aufwand realisieren, dass die Isolationsschicht, die auf einen Teil des Batteriegehäuses der Batteriezelle aufgebracht wird, derart nahe an das elektrische Kontaktelement heranreicht, dass nicht ein zwischen dem Kontaktelement und der Isolationsschicht angeordneter Bereich des Batteriegehäuses mittels weiterer Isolationsmaßnahmen elektrisch isoliert werden muss.

In der Praxis erfolgt das elektrische Isolieren derartiger Bereiche nach dem Stand der Technik insbesondere dadurch, dass Abschnitte eines Isolationsmaterials auf diese Bereiche aufgeklebt werden und diese dadurch elektrisch isoliert werden. Nach dem Stand der Technik werden hierbei die Abschnitte ausgestanzt und auf einen Träger aufgebracht, der aufgerollt und im aufgerollten Zustand bereitgestellt wird. Bei der Herstellung der Batteriezelle wird das Trägermaterial abgerollt, die Abschnitte werden von dem Trägermaterial entnommen und auf die entsprechenden Bereiche der Batteriezellen aufgeklebt. Dabei handelt es sich oftmals um Bereiche der Batteriezellen, die die elektrischen Kontaktelemente umgeben. Um auf derartige Bereiche eine wirksame elektrische Isolation aufzubringen, weisen die Abschnitte oftmals Ausnehmungen auf. Die Abschnitte werden dann derart aufgeklebt, dass die Kontaktelemente durch die Ausnehmungen hindurchtreten und so der Abschnitt das Kontaktelement umgibt.

Nachteilig an derartigen Verfahren ist es jedoch, dass die Kosten für die elektrische Isolation vergleichsweise hoch sind. Dies liegt daran, dass die Abschnitte an die zu isolierenden Bereiche, auf die sie aufgeklebt werden sollen, angepasst zur Verfügung gestellt werden müssen. Entsprechend werden individuell konfektionierte Abschnitte auf Trägermaterialien hergestellt, was zu hohen Materialkosten hinsichtlich der Abschnitte führt. Zudem ist das Handling der vorkonfektionierten Abschnitte aufgrund deren Form, bei der häufig die Ausnehmung, zumindest Bereichsweise, lediglich von sehr schmalen Streifen des Isolationsmaterials umgeben ist, oftmals schwierig.

Aufgabe der vorliegenden Erfindung ist es daher, ein Verfahren zum Isolieren einer Batteriezelle aufzuzeigen, das mit geringeren Materialkosten verbunden ist und sich einfach durchführen lässt.

Die Aufgabe wird gelöst durch ein Verfahren zum Isolieren einer Batteriezelle mit den Merkmalen des Anspruchs 1. Die Merkmale der abhängigen Ansprüche betreffen vorteilhafte Ausführungsformen.

Die zu isolierenden Batteriezellen weisen ein Batteriegehäuse mit einem elektrischen Kontaktelement zum elektrischen Kontaktieren eines Pols der Batteriezelle auf. Bei der Batteriezelle handelt es sich insbesondere um eine Sekundärbatterie und/oder einen Akkumulator, Beispielsweise einen Lithium-Ionen-Akkumulator.

Ein Teil des Batteriegehäuses der Batteriezelle wird mit einer Isolationsschicht versehen. Dies kann insbesondere erfolgen, nachdem das Batteriegehäuse verschlossen worden ist. Bei dem Batteriegehäuse kann es sich insbesondere um ein Batteriegehäuse aus einem metallischen Werkstoff handeln.

Bei der Batteriezelle kann es sich um eine prismatische Zelle handeln. Prismatische Zellen weisen ein Batteriegehäuse mit einer zumindest im wesentlichen quaderförmigen Grundform auf. Durch diese Grundform werden entsprechende Flächen des Batteriegehäuses definiert. Die Isolationsschicht kann in diesem Zusammenhang insbesondere auf einen Teil des Batteriegehäuses aufgebracht werden, der vier durch die Grundform definierte Flächen umfasst, die derart aneinander angrenzen, dass sie bezogen auf dessen Grundform eine Mantelfläche des Batteriegehäuses bilden und an denen insbesondere kein Kontaktelement angeordnet ist..

Hierbei kann die Isolationsschicht insbesondere durch ein, insbesondere bandförmiges, Material gebildet werden, dass auf die Batteriezelle aufgebracht wird. Anschaulich ausgedrückt kann die Batteriezelle mit dem, insbesondere bandförmigen, Material umwickelt werden, um die Batteriezelle mit der Isolationsschicht zu versehen. Bei dem Material kann es sich insbesondetre um eine Folie handeln. Es hat sich gezeigt, dass sich derartig isolierte Batteriezellen besonders gut für das beschriebene Verfahren eignen.

Ein Abschnitt eines Isolationsmaterials wird auf einen zwischen dem elektrischen Kontaktelement und der Isolationsschicht angeordneten Bereich des Batteriegehäuses aufgeklebt und dieser Bereich dadurch elektrisch isoliert. Der Bereich kann das elektrische Kontaktelement umgeben. Insbesondere bei Batteriezellen, bei denen die Isolationsschicht auf die vorstehend beschriebene Art und Weise aufgebracht wird, besteht oftmals die Notwendigkeit, einen derartigen Bereich durch eine die Isolationsschicht ergänzende Isolationsmaßnahme elektrisch zu isolieren, da die Isolationsschicht oftmals nicht oder zumindest nicht mit vertretbarem Aufwand derart gestaltet werden kann, dass sie ausreichend nahe an das Kontaktelement heranreicht.

Die Aufgabe wird insbesondere dadurch gelöst, dass das Isolationsmaterial als aufgerollter Streifen bereitgestellt und der Abschnitt von dem aufgerollten Streifen abgerollt und abgetrennt wird, bevor der Abschnitt auf das Batteriegehäuse aufgeklebt wird. Bei dem Isolationsmaterial kann es sich insbesondere um Polyethylenterephthalat (PET) handeln.

Es hat sich im Zusammenhang mit der vorliegenden Erfindung herausgestellt, dass die Isolationsaufgabe auch dadurch gelöst werden kann, dass die Abschnitte von einem aufgerollten Streifen des Isolationsmaterials abgerollt und abgetrennt werden, bevor sie auf den zu isolierenden Bereich des Batteriegehäuses aufgeklebt werden. Aufgerollte Streifen des Isolationsmaterials lassen sich jedoch wesentlich kostengünstiger bereitstellen als die fertig konfektionierten, auf einem Trägermaterial bereitgestellten Abschnitte. Hierdurch können die Materialkosten für das Verfahren zur Isolation des Batteriegehäuses wesentlich gesenkt werden.

Das Verfahren kann vorsehen, dass der Streifen vor dem Aufrollen mit einer selbstklebenden Beschichtung versehen wird. Ein derartiger Streifen erleichtert die Durchführung des Verfahrens im Hinblick auf die Herstellung der Verklebung des Abschnitts, da diese mittels der selbstklebenden Beschichtung in einfacher Weise erfolgen kann.

Das Verfahren kann vorsehen, dass vor dem Aufrollen des Streifens Ausnehmungen in den Streifen eingebracht werden. Hierdurch kann ein an die zu lösende Isolationsaufgabe angepasstes Vormaterial erzeugt werden, bei dem jedoch der Hauptgrund für den wesentlichen Vorteil im Hinblick auf Materialkosten und Handling, nämlich die Bereitstellung des Streifens als zusammenhängenden aufgerollten Streifen, nicht verloren geht und sich weiterhin kostensenkend auswirkt. Die Ausnehmungen können beispielsweise in den Streifen eingebracht werden, in dem Stücke des Streifens aus dem Streifen ausgestanzt werden. Durch ein derartiges Ausstanzen lassen sich die Ausnehmungen in kostengünstiger Weise erzeugen.

Die Streifen mit den eingebrachten Ausnehmungen ermöglichen es, dass der Abschnitt derart auf den Bereich des Batteriegehäuses aufgeklebt wird, dass das Kontaktelement durch eine Ausnehmung in dem Abschnitt hindurchtritt und der Abschnitt das Kontaktelement umgibt. Auf diese Weise kann ein das Kontaktelement umgebender Bereich des Batteriegehäuses, der zwischen dem Kontaktelement und der Isolationsschicht angeordnet ist, mit einem einzigen Abschnitt elektrisch isoliert werden. Die Ausnehmungen sind dabei insbesondere an das Kontaktelement angepasst und derart über die Länge des Streifens verteilt, dass nach dem Abtrennen der Abschnitte von dem Streifen jeder Abschnitt eine Ausnehmung aufweist.

Alternativ und/oder ergänzend kann das Verfahren vorsehen, dass eine Mehrzahl Abschnitte auf den Bereich des Batteriegehäuses derart einander überlappend aufgeklebt wird, dass die Abschnitte zu einer zusammenhängenden Abschnittsanordnung zusammengesetzt werden. Auf diese Weise lassen sich auch komplexe Geometrien der mittels der Abschnitte zu isolierenden Bereiche isolieren, indem deren Gestalt durch die aus den Abschnitten zusammengesetzte Abschnittsanordnung nachgebildet wird. Hat sich gezeigt, dass eine derartige "patchworkartige" Isolation durchaus geeignet ist, entsprechende Bereiche eines Batteriegehäuses einer Batteriezelle zuverlässig elektrisch zu isolieren. Gleichzeitig können die Abschnitte von aufgerollten Streifen und damit einem kostengünstigen Vormaterial, das idealerweise bereits auf dem Markt verfügbar ist, abgetrennt werden.

Das Verfahren kann vorsehen, dass die Abschnitte derart zusammengesetzt werden, dass die Abschnittsanordnung eine von den Abschnitten umgebene Ausnehmung aufweist und das Kontaktelement durch diese Ausnehmung hindurchtritt, so dass die Abschnittsanordnung das Kontaktelement umgibt. Auf diese Weise lässt sich mittels der Abschnittsanordnung auch eine das Kontaktelement umgebende Isolierung schaffen.

Das Verfahren kann vorsehen, dass eine Mehrzahl aufgerollter Streifen mit unterschiedlicher Breite bereitgestellt und Abschnitte von der Mehrzahl aufgerollter Streifen abgerollt und abgetrennt werden und die Abschnittsanordnung aus Abschnitten unterschiedlich breiter Streifen zusammengesetzt wird. Durch eine derartige Verwendung unterschiedlich breiter Streifen lässt sich die mögliche Geometrie der Abschnittsanordnung einfacher und vielfältiger variieren als bei der Verwendung lediglich eines Streifens mit einer Breite als Quelle für die Abschnitte. Insbesondere können zwei aufgerollte Streifen mit unterschiedlicher Breite bereitgestellt und Abschnitte von beiden aufgerollten Streifen abgerollt und abgetrennt werden. In diesem Fall kann die Abschnittsanordnung insbesondere aus jeweils zwei Abschnitten beider Streifen zusammengesetzt werden. Die Abschnittsanordnung kann hierbei derart zusammengesetzt werden, dass die Abschnitte desselben Streifens bezogen auf das Kontaktelement einander gegenüberliegend angeordnet sind. Mit einer derartigen Abschnittsanordnung können insbesondere die typischerweise im Fall von prismatischen Zellen zu isolierenden Bereiche um die Kontaktelemente der jeweiligen Zelle besonders gut isoliert werden. Eine derartig gestaltete Abschnittsanordnung lässt sich an diese Bereiche besonders gut hinsichtlich ihrer Geometrie anpassen.

Alternativ und/oder ergänzend kann das Verfahren vorsehen, dass Abschnitte und/oder Abschnittsanordnungen derart auf eine Mehrzahl zwischen dem Kontaktelement und der Isolationsschicht angeordnete Bereiche des Batteriegehäuses aufgeklebt werden, dass sich eine Mehrzahl voneinander getrennter Abschnitte und/oder Abschnittsanordnungen ergibt. Eine derartige Anordnung der Abschnitte und/oder Abschnittsanordnungen kann insbesondere dann sinnvoll sein, wenn die Isolationsschicht an Teilabschnitten des Umfangs des Kontaktelements weit genug an das Kontaktelement heranreicht, um an diesen Teilabschnitten eine zusätzliche Isolation des Batteriegehäuses zwischen Kontaktelement und Isolationsschicht entfallen lassen zu können. Dann ist es ausreichend, die Abschnitte und/oder Abschnittsanordnungen lediglich auf jene Bereiche zwischen dem Kontaktelement und der Isolationsschicht aufzukleben, die sich an den Teilabschnitten des Umfangs des Kontaktelements befinden, an denen die Isolationsschicht nicht weit genug an das Kontaktelement heranreicht.

Das Kontaktelement kann an einer durch die Grundform der Batterie definierten Fläche angeordnet sein.

Das Verfahren kann insbesondere vorsehen, dass das Kontaktelement an einer durch die Grundform der Batteriezelle definierten Fläche angeordnet ist. Alternativ und/oder Ergänzend kann eine Mehrzahl, insbesondere zwei, Kontaktelemente an einer durch die Grundform der Batteriezelle definierten Fläche angeordnet sein. Es ist insbesondere vorteilhaft, wenn sich Randbereich der Isolationsschicht, die beim Versehen der Batteriezelle mit der Isolationsschicht auf über Kanten an die Fläche mit dem Kontaktelement oder der Mehrzahl Kontaktelemente angrenzende Flachen aufgebracht wird, sich über die Kanten an der Oberfläche des Batteriegehäuses entlang in die Fläche mit dem Kontaktelement oder der Mehrzahl Kontaktelemente erstreckend auf diese Fläche aufgebracht wird. Zu diesem Zweck kann insbesondere eine Folie, aus der die Isolationsschicht gebildet wird, um die Kanten gebogen und/oder gefaltet werden.

Der Abschnitt und/oder die Abschnittsanordnung können mit einem Randbereich der Isolationsschicht überlappend aufgeklebt werden. Bei dem Randbereich kann es sich insbesondere um einen sich über Kanten an der Oberfläche des Batteriegehäuses entlang in die Fläche mit dem Kontaktelement oder der Mehrzahl Kontaktelemente erstreckenden Randbereich handeln. Durch die Überlappung zwischen Isolationsschicht und Abschnitt und/oder Abschnittsanordnung kann eine sichere elektrische Isolation auch im Bereich des Übergangs zwischen Abschnitt und/oder Abschnittsanordnung einerseits und der Isolationsschicht andererseits gewährleistet werden. Dies ist insbesondere vorteilhaft, wenn es sich bei dem Randbereich um einen Ranrbereich handelt, der sich

Die Batteriezellen können eine zumindest im wesentlichen quaderförmige Grundform aufweisen. An einander gegenüberliegenden, durch die Grundform der Batteriezellen definierten Flächen können die Batteriezellen jeweils ein Kontaktelement und einen zwischen dem Kontaktelement und der Isolationsschicht angeordneten Bereich oder eine Mehrzahl zwischen dem Kontaktelement und der Isolationsschicht angeordnete Bereiche des Batteriegehäuses aufweisen, auf den ein Abschnitt und/oder eine Abschnittsanordnung aufgeklebt werden. Bei derartigen Batteriezellen fällt die durch das vorstehend beschriebene Verfahren ermöglichte Einsparung besonders hoch aus, da eine elektrische Isolation durch aufgeklebte Abschnitte an zwei gegenüberliegenden Seiten der Batteriezelle erfolgt und folglich zwei der kostenintensiven, nach dem Stand der Technik einzeln auf einem Trägermaterial aufgenommen bereitgestellten, Abschnitte ersetzt werden können.

Weitere praktische Ausführungsformen der Erfindung sind nachfolgend im Zusammenhang mit den Zeichnungen beschrieben. Es zeigen:
- Fig. 1: eine schematische Darstellung eines Verfahrens nach dem Stand der Technik,
- Fig. 2: eine schematische Darstellung eines beispielhaften Verfahrens zum Isolieren von Batteriezellen nach einer ersten Ausführungsform,
- Fig. 3: eine schematische Darstellung eines beispielhaften Verfahrens zum Isolieren von Batteriezellen nach einer zweiten Ausführungsform,
- Fig. 4: eine schematische Darstellung eines beispielhaften Verfahrens zum Isolieren von Batteriezellen nach einer dritten Ausführungsform.

In den Figuren sind jeweils eine Draufsicht auf eine Fläche einer Batteriezelle 10 im unbeklebten Zustand (A), der Abschnitt bzw. die Abschnitte mit denen die Batteriezelle beklebt wird (B) sowie eine Draufsicht auf die Fläche im beklebten Zustand (C) dargestellt.

Die in den Figuren jeweils dargestellte, durch die Grundform der Batteriezelle 10 definierte Fläche weist ein, im gezeigten Beispiel beispielhaft mittig angeordnetes, Kontaktelement 12 auf. Die Batteriezelle 10 ist mit einer Isolationsschicht 14 versehen. Die Isolationsschicht 14 wird in den gezeigten Beispielen insbesondere auf einen Teil des Batteriegehäuses aufgebracht, der vier durch die Grundform definierte, nicht dargetellte Flächen umfasst, die derart aneinander angrenzen, dass sie bezogen auf dessen Grundform eine Mantelfläche des Batteriegehäuses bilden und an denen kein Kontaktelement angeordnet ist. Ein Randbereich dieser Isolationsschicht 14 wird, wenn die Batteriezelle 10 mit der Isolationsschicht 14 versehen wird, auf die dargestellte Fläche, an der das Kontaktelement 12 angeordnet ist, aufgebracht. Dabei erstreckt sich dieser Randbereich über Kanten an der Oberfläche des Batteriegehäuses entlang in die dargestellte Fläche mit dem Kontaktelement 12. Hierbei reicht die Isolationsschicht 14 jedoch nicht derart an das Kontaktelement 12 heran, dass sich eine hinreichende Isolierung im Bereich des Kontaktelements 12 ergibt. Vielmehr bleibt ein zwischen dem elektrischen Kontaktelement 12 und der Isolationsschicht 14 angeordneter Bereich 16 des Batteriegehäuses unisoliert.

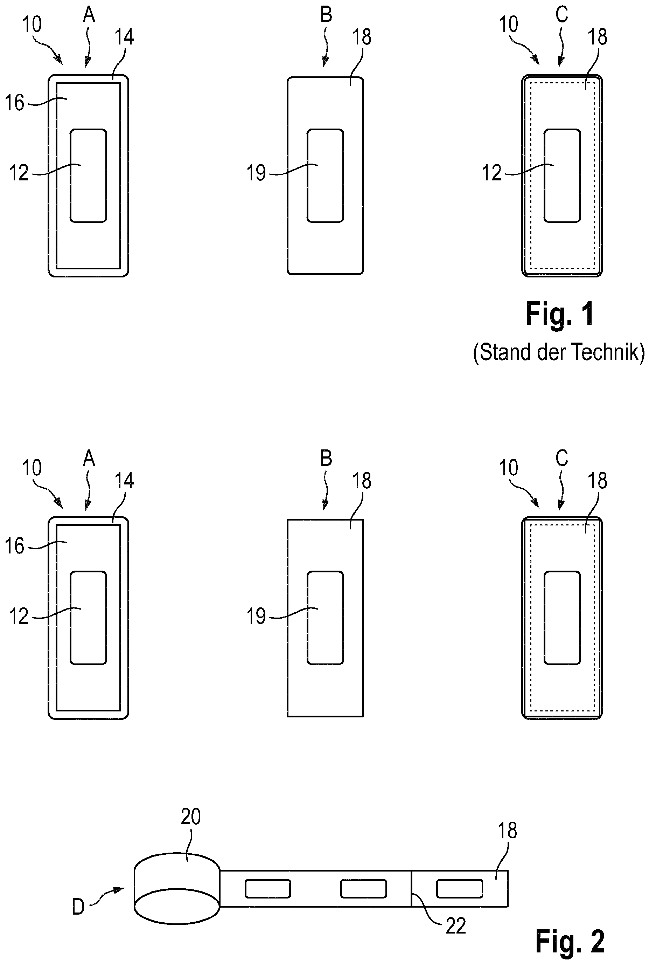

Figur 1 zeigt das Verfahren nach dem Stand der Technik. Dieser Zustand der Batteriezelle 10 ist in Figur 1A beispielhaft dargestellt.

Die Verfahren nach dem Stand der Technik sehen vor, dass ein Abschnitt 18 eines Isolationsmaterials bereitgestellt und auf den Bereich 16 des Batteriegehäuses aufgeklebt wird. Dabei kann der Abschnitt 18 derart auf die Batteriezelle 10 aufgeklebt werden, dass er mit dem Randbereich der Isolationsschicht 14 überlappt. Die resultierende Batteriezelle 10 mit dem aufgeklebten Abschnitt 18 ist in Figur 1C dargestellt.

Die nach dem Stand der Technik verwendeten Abschnitte 18 weisen Ausnehmungen 19 auf. Das Kontaktelement 12 wird beim Aufkleben eines Abschnitts 18 auf die Batteriezelle 10 durch die Ausnehmung 19 des Abschnitts 18 hindurchgeführt. Auf diese Weise umgibt im Fall des in Figur 1 dargestellten Beispiels aus dem Stand der Technik der Abschnitt 18 das Kontaktelemente 12.

Das beschriebene Verfahren zur Isolation der Batteriezelle 10 sieht nach einem ersten in Figur 2 dargestellten Ausführungsbeispiel vor, dass das Isolationsmaterial als aufgerollter Streifen 20 bereitgestellt wird. Von dem Streifen 20 werden die beispielhaft in Figur 2B dargestellten Abschnitte 18 abgerollt und abgetrennt, bevor die Abschnitte 18 auf die beispielhaft in Figur 2A dargestellte Batteriezelle 10 aufgeklebt werden, um als Ergebnis die in Figur 2C dargestellte Batteriezelle 10 zu erhalten.

Auch im Fall des in Figur 2 beispielhaft dargestellten Ausführungsbeispiels umgibt der Abschnitt 18 das Kontaktelement 12, das durch eine Ausnehmung 19 im Abschnitt 18 hindurchgeführt wird, wenn der Abschnitt 18 auf die Batteriezelle 10 aufgeklebt wird. Der in Figur 2D beispielhaft dargestellte Streifen 20 weist entsprechend bereits Ausnehmungen 19 auf. Beim Abtrennen der Abschnitte 18 von dem Streifen 20 können die Trennstellen 22 wie im gezeigten Beispiel so gewählt sein, dass jeder Abschnitt 18 genau eine Ausnehmung 19 für ein Kontaktelement 12 aufweist.

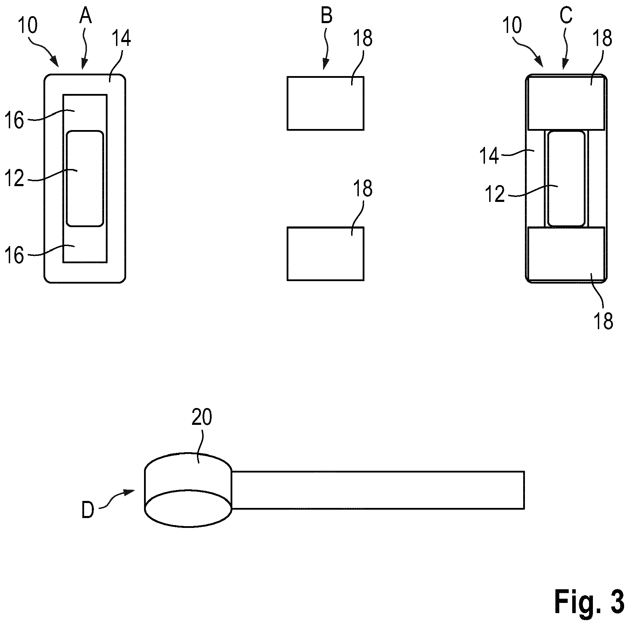

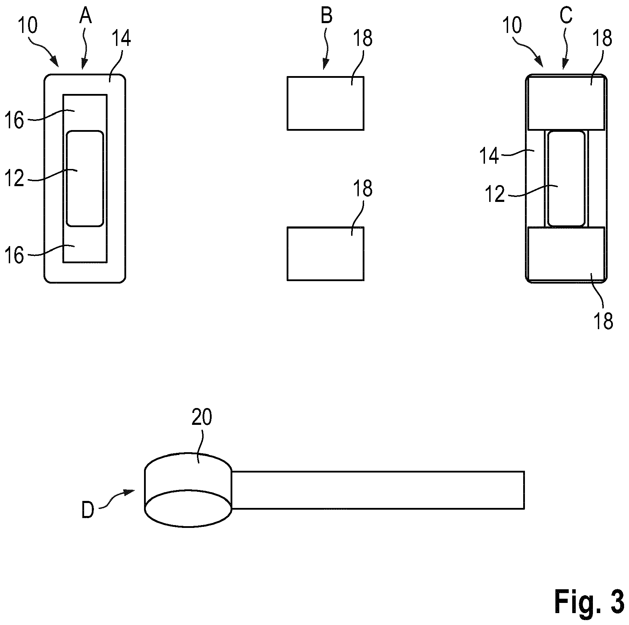

Im Fall des in der Figur 3 dargestellten Beispiels reicht der Randbereich der Isolationsschicht 14 an Teilabschnitten des Umfangs des Kontaktelements 12 weit genug an das Kontaktelement 12 heran, um an diesen Teilabschnitten des Umfangs des Kontaktelements 12 eine zusätzliche Isolation des Batteriegehäuses zwischen dem Kontaktelement 12 und der Isolationsschicht 14 entfallen zu lassen, wie anhand der Figur 3A zu erkennen ist. In Folge weist die in Figur 3A beispielhaft dargestellte Batteriezelle 10 an der beispielhaft dargestellten Fläche zwei Bereiche 16 des Batteriegehäuses auf, die zwischen der Isolationsschicht 14 und dem Kontaktelement 12 an Teilabschnitten des Umfangs des Kontaktelements 12 angeordnet sind, an denen die Isolationsschicht 14 nicht weit genug an das Kontaktelement 12 heranreicht. Das Verfahren kann in diesem Fall vorsehen, dass jeder dieser Bereiche 16 des Batteriegehäuses mit jeweils einem Abschnitt 18, wie sie beispielhaft in der Figur 3B dargestellt sind, beklebt wird. Entsprechend werden die Abschnitte 18, wie der Figur 3C beispielhaft dargestellt, derart auf die Batteriezelle 10 geklebt, dass sich 2 voneinander getrennte Abschnitte 18 ergeben. Auch in diesem gezeigten Beispiel können die auf die Batteriezelle 10 geklebten Abschnitte 18 sich mit dem Randbereich der Isolationsschicht 14 überlappen.

Der in Figur 3D beispielhaft dargestellte Streifen 20 wird ebenfalls in aufgerollter Form bereitgestellt und stellt eine sehr kostengünstige Variante für ein Vormaterial für die Abschnitte 18 dar.

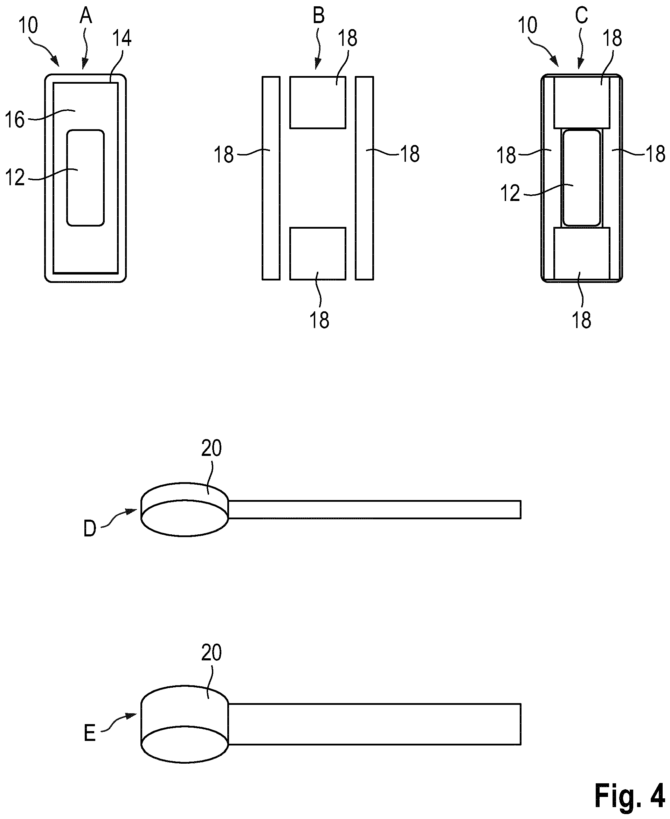

Im Fall des in der Figur 4 dargestellten Beispiels entspricht die Gestaltung der Batteriezelle 10, wie sie in Figur 4A dargestellt ist, den beispielhaft in den Figuren 1 und 2 dargestellten Batteriezellen 10. Um den das Kontaktelement 12 umgebenden Bereich 16 dieser Batteriezelle 10 zu isolieren, wird im Fall des in Figur 4 dargestellten Beispiels eine Abschnittsanordnung aus den vier beispielhaft in Figur 4B dargestellten Abschnitten 18 gebildet. Die in Figur 4B dargestellten Abschnitte 18 werden beim Bekleben der Batteriezelle 10 zu der in der Figur 4C sichtbaren Abschnittsanordnung zusammengesetzt.

In den Figuren 4D und 4E sind jeweils Streifen 20 aus Isolationsmaterial beispielhaft dargestellt, aus denen die in Figur 4B dargestellten Abschnitte 18 hergestellt werden, indem sie von den Streifen 20 abgetrennt werden. Wie im gezeigten Beispiel können Streifen 20 unterschiedlicher Breite genutzt werden, um Abschnitte 18 mit unterschiedlichen Geometrie zu erhalten, die dann in zweckmäßiger Weise zu einer Abschnittsanordnung zusammengesetzt werden können, die geometrisch an den zu isolierenden Bereich 16 des Batteriegehäuses angepasst ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Batteriezelle
- 12: Kontaktelement
- 14: Isolationsschicht
- 16: Bereich
- 18: Abschnitt
- 19: Ausnehmungen
- 20: Streifen
- 22: Trennstellen

- A: unbeklebter Zustand
- B: Abschnitte mit denen die Batteriezelle beklebt wird
- C: beklebter Zustand
- D, E: bereitgestelltes Isolationsmaterial

## Patentansprüche

1. Verfahren zum Isolieren einer Batteriezelle (10),
wobei die Batteriezelle (10) ein Batteriegehäuse mit einem elektrischen Kontaktelement (12) zum elektrischen Kontaktieren eines Pols der Batteriezelle (10) aufweist, wobei ein Teil des Batteriegehäuses der Batteriezelle (10) mit einer Isolationsschicht (14) versehen wird und wobei auf einen zwischen dem elektrischen Kontaktelement (12) und der Isolationsschicht (14) angeordneten Bereich (16) des Batteriegehäuses ein Abschnitt (18) eines Isolationsmaterials aufgeklebt und dieser Bereich (16) des Batteriegehäuses dadurch elektrisch isoliert wird,
**dadurch gekennzeichnet,**
**dass** das Isolationsmaterial als aufgerollter Streifen (20) bereitgestellt und der Abschnitt (18) von dem aufgerollten Streifen (20) abgerollt und abgetrennt wird, bevor der Abschnitt (18) auf das Batteriegehäuse aufgeklebt wird.

2. Verfahren nach Anspruch 1,
**dadurch gekennzeichnet,**
**dass** der Streifen (20) vor dem Aufrollen mit einer selbstklebenden Beschichtung versehen wird.

3. Verfahren nach einem der vorigen Ansprüche,
**dadurch gekennzeichnet,**
**dass** vor dem Aufrollen des Streifens (20) Ausnehmungen (19) in den Streifen (20) eingebracht werden, insbesondere indem Stücke des Streifens (20) aus dem Streifen (20) ausgestanzt werden.

4. Verfahren nach einem der vorigen Ansprüche,
**dadurch gekennzeichnet,**
**dass** der Abschnitt (18) derart auf den Bereich des Batteriegehäuses aufgeklebt wird, dass das Kontaktelement (12) durch eine Ausnehmung (19) in dem Abschnitt (18) hindurchtritt und der Abschnitt (18) das Kontaktelement umgibt.

5. Verfahren nach einem der vorigen Ansprüche,
**dadurch gekennzeichnet,**
**dass** eine Mehrzahl Abschnitte (18) auf den Bereich (16) des Batteriegehäuses derart einander überlappend aufgeklebt werden, dass die Abschnitte (18) zu einer zusammenhängenden Abschnittsanordnung zusammengesetzt werden.

6. Verfahren nach Anspruch 5,
**dadurch gekennzeichnet,**
**dass** die Abschnitte (18) derart zusammengesetzt werden, dass die Abschnittsanordnung eine von Abschnitten (18) umgebene Ausnehmung (19) aufweist und das Kontaktelement (12) durch diese Ausnehmung (19) hindurchtritt, so dass die Abschnittsanordnung das Kontaktelement (12) umgibt.

7. Verfahren nach Anspruch 5 oder 6,
**dadurch gekennzeichnet,**
**dass** eine Mehrzahl, insbesondere zwei, aufgerollte Streifen (20) mit unterschiedlicher Breite bereitgestellt und Abschnitte (18) von der Mehrzahl aufgerollter Streifen (20) abgerollt und abgetrennt werden und die Abschnittsanordnung aus Abschnitten (18) unterschiedlich breiter Streifen (20) zusammengesetzt wird, insbesondere wobei die Abschnitte (18) desselben Streifens (20) bezogen auf das Kontaktelement (12) einander gegenüberliegend angeordnet sind.

8. Verfahren nach einem der vorigen Ansprüche,
**dadurch gekennzeichnet,**
**dass** Abschnitte (18) und/oder Abschnittsanordnungen derart auf eine Mehrzahl zwischen dem Kontaktelement (12) und der Isolationsschicht (14) angeordnete Bereiche (16) des Batteriegehäuses aufgeklebt werden, dass sich eine Mehrzahl voneinander getrennter Abschnitte (18) und/oder Abschnittsanordnungen ergibt.

9. Verfahren nach einem der vorigen Ansprüche,
**dadurch gekennzeichnet,**
**dass** das Kontaktelement (12) an einer durch die Grundform der Batteriezelle (10) definierten Fläche angeordnet ist und ein Randbereich der Isolationsschicht (14) beim Versehen der Batteriezelle (10) mit der Isolationsschicht (14) auf diese Fläche aufgebracht und der Abschnitt (18) und/oder die Abschnittsanordnung mit diesem Randbereich überlappend aufgeklebt wird.

10. Verfahren nach einem der vorigen Ansprüche,
**dadurch gekennzeichnet,**
**dass** die Batteriezellen (10) eine zumindest im Wesentlichen quaderförmige Grundform aufweisen und an einander gegenüberliegenden durch die Grundform der Batteriezellen (10) definierten Flächen jeweils ein Kontaktelement (12) und einen zwischen dem Kontaktelement (12) und der Isolationsschicht (14) angeordneten Bereich (16) des Gehäuses aufweisen, auf den ein Abschnitt und/oder einer Abschnittsanordnung aufgeklebt werden.
